Europäisches Patentamt

European Patent Office

Office européen des brevets

(11) Numéro de publication: **0 406 797 A1**

## (12) DEMANDE DE BREVET EUROPEEN

(21) Numéro de dépôt: **90112675.5**

(22) Date de dépôt: **03.07.90**

(51) Int. Cl.5: **G02B 6/38**

(30) Priorité: **03.07.89 FR 8908889**

(43) Date de publication de la demande:
**09.01.91 Bulletin 91/02**

(84) Etats contractants désignés:
**AT BE CH DE DK ES FR GB GR IT LI LU NL SE**

(71) Demandeur: **CEGELEC**
**13, rue Antonin-Raynaud**
**F-92309 Levallois-Perret(FR)**

(72) Inventeur: **Jarret, Bertrand**
**15, Rue des Roses**
**F-95520 Osny(FR)**
Inventeur: **Legrand, Joel**
**29, Avenue de Londres**
**F-77290 Mitry Mory(FR)**

(74) Mandataire: **Weinmiller, Jürgen et al**
**Lennéstrasse 9 Postfach 24**
**D-8133 Feldafing(DE)**

(54) **Embout de raccordement pour fibre optique, son procédé de montage, et procédé de raccordement de deux fibres optiques à l'aide de tels embouts.**

(57) Embout de raccordement pour connexion bout à bout de deux fibres optiques, comprenant un corps cylindrique (1) à alésage axial (2) pour le logement de l'extrémité de l'une (5) des fibres optiques et à face avant plane polie (3), destiné à être fixé dans une moitié de l'alésage d'un manchon de connexion (13) face contre face avec un embout de raccordement identique pour le logement de l'extrémité de l'autre fibre optique (5A). Il comprend en outre un élément optique de faible longueur (7) en un matériau de même indice que celui des fibres optiques, à face arrière plane polie ou non (9) et à face avant d'excellent état de surface (8, 11), disposé dans la partie avant de son alésage pour que son extrémité arrière (9) soit proche de l'extrémité avant (6) de la fibre correspondante et que son entrémité avant vienne affleurer la face avant plane polie (3) de l'embout, et une mince couche (10) d'adhésif de même indice, disposée entre l'extrémité avant de la fibre optique et l'extrémité arrière de l'élément optique.

Procédés de montage d'un tel embout, et de raccordement de deux fibres optiques à l'aide de tels embouts.

## FIG.1

# EMBOUT DE RACCORDEMENT POUR FIBRE OPTIQUE, SON PROCÉDÉ DE MONTAGE, ET PROCÉDÉ DE RACCORDEMENT DE DEUX FIBRES OPTIQUES À L'AIDE DE TELS EMBOUTS.

La présente invention concerne un embout de raccordement pour connexion bout à bout de deux fibres optiques, comprenant un corps cylindrique muni d'un alésage axial de logement de l'extrémité de l'une des fibres optiques à connecter, et à face avant plane polie, destiné à être fixé dans une moitié de l'alésage d'un manchon creux de connexion face contre face avec un embout de raccordement identique de logement de l'extrémité de l'autre fibre optique. Elle s'applique plus particulièrement aux embouts de raccordement de fibres optiques en matière plastique. Elle s'étend en outre à un procédé de montage de tels embouts et à un procédé de raccordement de deux fibres optiques à l'aide de tels embouts.

Lorsque l'on veut raccorder deux fibres optiques bout à bout, il est nécessaire que leurs surfaces frontales soient perpendiculaires à leur axe et très bien polies (les irrégularités de surface subsistantes devant être sous peine de grosses pertes de transmission à la connexion de l'ordre du dizième de micron). On connaît des procédés et des dispositifs à cet effet, mais ceux-ci sont difficiles à employer sur chantier, compte tenu des précisions requises.

La présente invention a pour but de procurer un embout de raccordement et un procédé de montage de cet embout, assurant de faibles pertes à la connexion, tout en étant utilisables sur chantier.

L'embout selon l'invention est caractérisé en ce qu'il comprend en outre un élément optique de faible longueur, en un matériau de même indice de réfraction que celui des fibres optiques à raccorder, à face arrière plane polie ou non et à face avant présentant un excellent état de surface, disposé dans la partie avant de son alésage de façon que l'extrémité arrière de cet élément soit à proximité de l'extrémité avant de la fibre optique correspondante, et que son extrémité avant vienne affleurer la face avant plane polie de l'embout, et une mince couche de matériau adhésif de même indice de réfraction que celui des fibres optiques à raccorder, disposée entre l'extrémité avant de la fibre optique et l'extrémité arrière de l'élément de fibre optique de faible longueur.

Selon une première variante de l'invention, la face avant d'excellent état de surface de l'élément optique de faible longueur est plane.

Selon une autre variante, la face avant présentant un excellent état de surface de cet élément est de forme sphérique convexe. Dans ce dernier cas, on réduit la divergence du rayonnement transmis à la sortie de la face avant, ce qui permet de tolérer un écartement plus important des faces avant des deux éléments de fibre optique sans augmentation des pertes de transmission.

Le procédé de montage d'un embout de raccordement selon l'invention est caractérisé en ce que l'on introduit dans l'alésage du corps cylindrique du côté de sa face avant plane polie un élément optique de faible longueur, à face arrière plane polie ou non, et à face avant présentant un excellent état de surface, de même indice de réfraction que celui des fibres optiques à raccorder. Cet élément optique est introduit de façon que sa face avant vienne affleurer la face avant plane polie du corps cylindrique. Il est disposé sur la face avant de la fibre optique une mince couche d'un matériau adhésif d'indice de réfraction égal à celui des fibres optiques à raccorder, et l'extrémité avant de la fibre optique correspondante est introduite jusqu'à ce qu'elle vienne en butée contre l'extrémité arrière de l'élément optique.

On introduit de préférence l'extrémité avant de la fibre optique à raccorder jusqu'à ce qu'elle soit en contact avec l'élément optique, et la fixe de manière à maintenir ce contact.

On emploie avantageusement comme matériau adhésif une résine liquide polymérisable au rayonnement ultra-violet, et un corps cylindrique en matériau transparent à ce rayonnement. Après introduction de l'extrémité avant de la fibre optique à raccorder, on soumet l'embout à un rayonnement ultra-violet.

Il est décrit ci-après, à titre d'exemple et en référence aux figures du dessin annexé, des dispositifs de raccordement à embouts selon l'invention.

La figure 1 représente en élévation avec coupe partielle un dispositif de raccordement comprenant deux embouts de raccordement dont l'élément optique de faible longueur présente une face avant plane, et leur montage.

La figure 2 représente en élévation avec coupe partielle un dispositif de raccordement comprenant deux embouts dont l'élément optique de faible longueur présente une face avant convexe de forme sphérique.

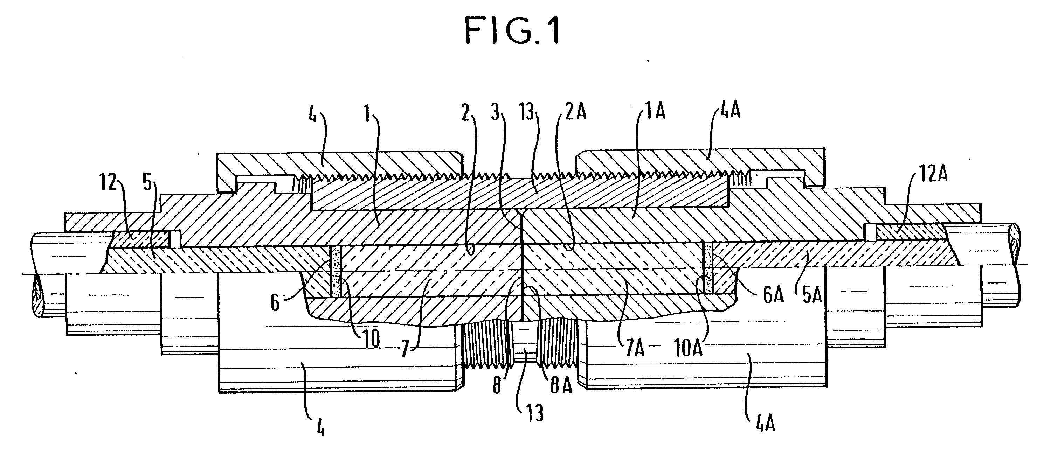

Dans la figure 1, le corps cylindrique 1 de l'embout de gauche à filetage externe, est percé d'un alésage 2. Sa face avant 3 perpendiculaire à son axe est plane et polie. Sur son extrémité arrière est fixé une bague 4 formant écrou.

Pour effectuer le raccordement des fibres optiques, on introduit dans la partie avant de l'alésage 2 un élément de fibre optique 7, relativement court, de diamètre très proche du diamètre interne de l'alésage, mais dont la face avant 8 a été soigneusement dressée perpendiculairement à son axe et polie en usine jusqu'à supprimer toute irrégularité de surface de dimension supérieure à 0,2 micron. Son indice de réfraction est égal à celui de fibres optiques à raccorder. On introduit alors par l'arrière de l'alésage 2 une fibre optique à raccorder 5, dont la gaine 12 a été coupée à une certaine distance de son extrémité de façon à permettre l'introduction de la fibre dénudée dans l'alésage, et dont l'extrémité avant a été coupée sans précaution en une face 6 relativement irrégulière et grossièrement perpendiculaire à son axe, puis revêtue d'une mince couche de résine liquide polymérisable 10. La face avant 8 de l'élément de fibre optique 7 étant maintenue dans le plan de la face avant 3 de l'embout 1, la fibre optique 5 est amenée en butée avec une légère pression contre la face arrière 9 de l'élément 7, dont elle n'est séparée que par la mince couche de résine liquide polymérisable, puis de préférence maintenue en contact contre cette face arrière. On soumet alors la résine à une polymérisation, soit catalytique, soit par rayonnement ultra-violet, l'embout 1 étant alors en un matériau transparent aux ultra-violets.

On opère de même avec un embout symétrique 1A, muni dans son alésage 2A d'un élément optique 7A et d'une fibre optique 5A, dont l'extrémité de la gaine 12A a été aussi coupée et l'extrémité avant coupée sans précaution en une face 6A, puis revêtue également d'une mince couche de résine polymérisable liquide 10A. On opère ensuite de même que pour la fibre optique 5. On amène les faces avant des embouts 1 et 1A en contact. On dispose alors autour des extrémités des embouts un manchon de raccordement 13 à filetage externe, et on visse sur ce manchon les bagues-écrous 4 et 4A.

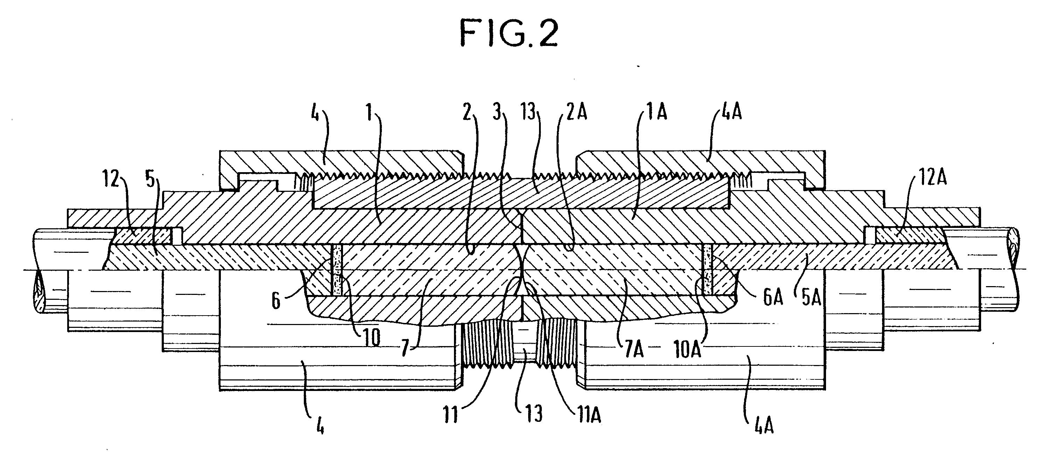

On peut aussi, comme représenté en figure 2, donner aux extrémités avant 11 et 11A des éléments de fibre optique 5 et 5A une forme sphérique convexe. Celle-ci réduit la divergence du rayonnement à l'extrémité des éléments et par suite diminue encore les pertes de transmission.

Le raccordement des fibres optiques s'effectue de la même manière que décrit précédemment en référence à la figure 1.

On comprendra que le fait de disposer sur chantier de tels éléments de fibre optique, à surface de géométrie bien définie et polie, fabriqués en usine, permet d'éviter les opérations de dressage et de polissage de l'extrémité des fibres optiques, particulièrement malaisées sur chantier, et les pertes de transmission relativement importantes de la connexion qu'elles entraînaient.

L'emploi des embouts de l'invention est particulièrement intéressant pour le raccordement de fibres optiques en matière plastique, mais il convient également pour le raccordement de fibres optiques en verre ou en silice.

## Revendications

1/ Embout de raccordement pour connexion bout à bout de deux fibres optiques, comprenant un corps cylindrique (1) muni d'un alésage axial (2) de logement de l'extrémité de l'une des fibres optiques à connecter (5), et à face avant plane polie, destiné à être fixé dans une moitié de l'alésage d'un manchon creux de connexion (13) face contre face avec un embout de raccordement identique de logement de l'extrémité de l'autre fibre optique (5A),
caractérisé en ce qu'il comprend en outre un élément optique de faible longueur (7) en un matériau de même indice de réfraction que celui des fibres optiques à raccorder, à face arrière plane polie ou non (9) et à face avant présentant un excellent état de surface (8 ; 11), disposé dans la partie avant de son alésage de façon que l'extrémité arrière de cet élément soit à proximité de l'extrémité avant (6) de la fibre optique correspondante, et que son extrémité avant vienne affleurer la face avant plane polie (3) de l'embout, et une mince couche (10) de matériau adhésif de même indice de réfraction que celui des fibres optiques à raccorder, disposée entre l'extrémité avant de la fibre optique et l'extrémité arrière de l'élément de fibre optique de faible longueur.

2/ Embout selon la revendication 1, caractérisé en ce que la face avant présentant un excellent état de surface (8) de l'élément de fibre optique de faible longueur est plane.

3/ Embout selon la revendication 1, caractérisé en ce que la face avant présentant un excellent état de surface (11) de l'élément de fibre optique de faible longueur a une forme sphérique convexe.

4/ Procédé de montage d'un embout de raccordement selon la revendication 1, caractérisé en ce que l'on introduit dans l'alésage (2) du corps cylindrique, du côté de sa face avant plane polie (3), un élément optique de faible longueur (7), à face arrière plane polie ou non (9), et à face avant présentant un excellent état de surface (8), de même indice de réfraction que celui des fibres optiques à raccorder, de façon que sa face avant vienne affleurer la face avant plane polie (3) du corps cylindrique, en ce que l'on dispose sur la face avant (6) de la fibre optique une mince couche (10) d'un matériau adhésif d'indice de réfraction égal à celui des fibres optiques à raccorder, et en ce que l'on introduit l'extrémité avant de la fibre optique à raccorder jusqu'à ce qu'elle vienne en butée contre l'extrémité arrière de l'élément optique.

5/ Procédé selon la revendication 4, caractérisé en ce que l'on introduit l'extrémité avant (6) de la fibre optique à raccorder jusqu'à ce qu'elle soit en contact avec l'élément optique (7), et en ce que l'on fixe la fibre optique de manière à maintenir ce contact.

6/ Procédé selon les revendications 4 ou 5, caractérisé en ce que l'on emploie comme matériau adhésif une résine liquide polymérisable au rayonnement ultra-violet, et un corps cylindrique (1) en matériau transparent à ce rayonnement, et en ce qu'après introduction de l'extrémité avant de la fibre optique à raccorder on soumet l'embout à un rayonnement ultra-violet.

7/ Procédé de raccordement de deux fibres optiques, caractérisé en ce que l'on monte chacune des fibres optiques dans un embout de raccordement selon le procédé de l'une des revendications 4 à 6, en ce que l'on applique face contre face les deux embouts l'un sur l'autre, en ce que l'on dispose autour des extrémités des embouts un manchon (13) à filetage externe à chaque extrémité des embouts, puis en ce que l'on visse sur ce manchon un écrou (4, 4A) de façon à maintenir chaque embout dans le manchon.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 396 982 (INT. STANDARD ELECTRICAL) * Figure 6; page 4, lignes 11-30; page 5, lignes 19-40 * | 1 | G 02 B 6/38 |
| X | --- | 4 | |
| Y | EP-A-0 043 585 (SUMITOMO) * Figure 8; page 10, lignes 2-9 * | 1 | |
| A | --- | 7 | |
| X | WO-A-8 604 156 (AT&T) * Figures 4,5; page 4, lignes 5-37; page 5, lignes 1-32 * | 4 | |
| A | --- | 1,2,3,5,6 | |
| A | PATENT ABSTRACTS OF JAPAN, vol. 11, no. 32 (P-541)[2479], 30 janvier 1987; & JP-A-61 201 206 (HITACHI) 05-09-1986 * En entier * | 4,6 | |
| A | US-A-4 787 699 (N.L. MOULIN) * En entier * | 1,2,4,5 | DOMAINES TECHNIQUES RECHERCHES (Int. Cl.5) G 02 B 6/00 |
| A | --- DE-A-2 708 014 (SIEMENS) * Figures 2,3,5; page 6, lignes 22-37; page 7, lignes 1-17 * | 1,2,3 | |
| A | --- WO-A-8 707 035 (AMP INC.) * Figures 1-6,9; page 6, lignes 7-35; page 7, lignes 1-35 * ----- | 1,2,4,5 | |

Le présent rapport a été établi pour toutes les revendications

| Lieu de la recherche | Date d'achèvement de la recherche | Examinateur |
|---|---|---|
| LA HAYE | 28-09-1990 | MATHYSSEK K. |